# EUROPEAN PATENT SPECIFICATION

(11) **EP 1 172 030 B1**
(45) Date of publication and mention of the grant of the patent: **01.09.2004**
(21) Application number: 01202233.1
(22) Date of filing: 11.06.2001
(51) Int. Cl.: A01J 5/017

(54) **A construction for automatically milking animals**
Konstruktion zum automatischen Melken von Tieren
Construction pour la traite automatique d'animaux

(30) Priority: 10.07.2000 NL 1015673
(43) Date of publication of application: 16.01.2002
(73) Proprietor: Lely Enterprises AG, 6300 ZUG (CH)
(72) Inventor: van der Lely, Alexander, 3065 NA Rotterdam (NL); Van den Berg, Karel, 2971 BR Bleskensgraaf (NL); Fransen, Renatus Ignatius Josephus, 3155 ZD Vlaardingen (NL)
(74) Representative: Corten, Maurice Jean F.M.

(56) References cited:
- WO-A-98/01022

## Description

The invention relates to a construction for automatically milking animals according to the preamble of claim 1.

Such a construction is known. Prior to connecting the teat cups the controllable robot arm pivots under the udder of the animal to be milked in order to position the teat cups there. The known constructions are often provided with a freely movable, electronically controlled robot arm. This has inter alia the disadvantage that the robot arm is sensitive to operational failure.

The invention aims at improving such a construction. According to the invention this is achieved by the measures described in the characterizing part of claim 1. The use of the mechanical guide element for the pivoting movement, which is each time substantially the same, results in a very robust and reliable milking robot. The guide element enables an accurate pivoting movement of the robot arm.

The invention will now be explained in further detail with reference to the accompanying figures.
Figure 1 shows schematically a side view of a part of the construction according to the invention, and
Figure 2 shows schematically the construction of Figure 1 according to the arrow II in said figure.

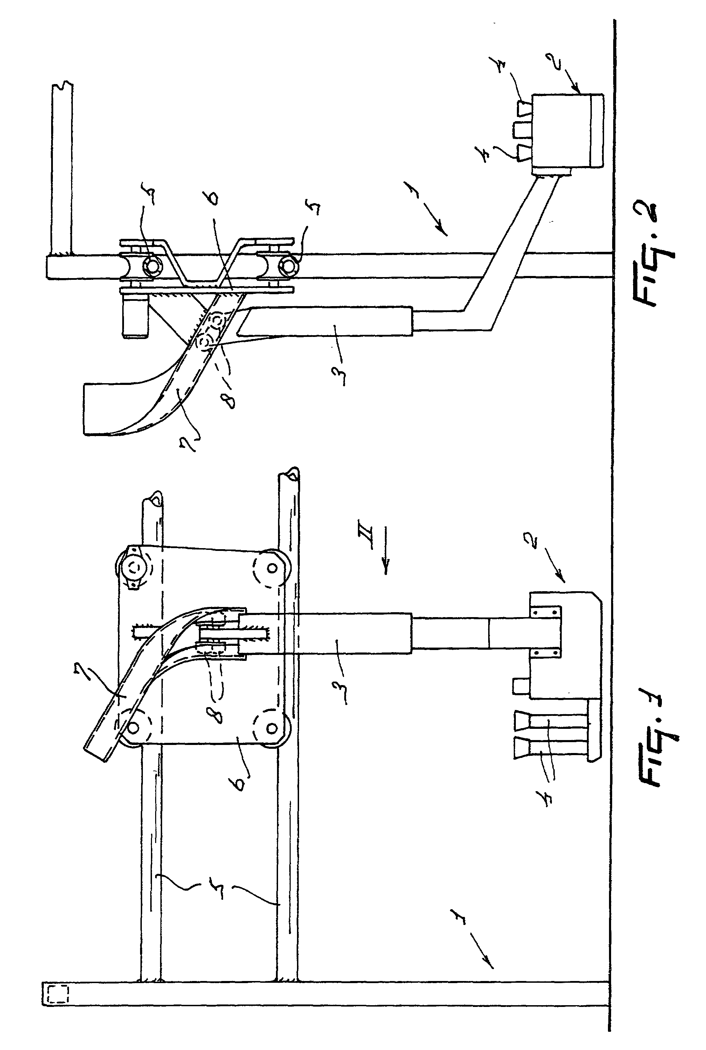

Figure 1 shows schematically a part of the construction according to the invention. The construction for automatically milking animals comprises a milk box 1 with a milking robot 2 (known per se), which is provided with a controllable robot arm 3 for connecting teat cups 4 to the teats of a (non-shown) animal to be milked.

The robot arm 3 can be moved in the longitudinal direction of the milk box 1 with the aid of control means appropriate therefor, such as the shown rail construction 5 with a suspension element 6 that is movable along said rail construction. Of course, the control means may also be designed differently, such as e.g. a parallelogram construction, a telescope construction, a cylinder construction or a hingeable construction. The rail construction 5 comprises two superposed, parallel, round rails, along which - as shown in the drawing - the suspension element 6, equipped with four wheels, can be moved.

To the suspension element 6 there is fitted a guide element 7 for the robot arm 3. Said guide element 7 is formed as a curve path such that the robot arm 3 when moving along the guide element 7 pivots the teat cups 4 between a first position beyond the reach of the animal to be milked and a second position under the udder of the animal to be milked. For accurate positioning of the teat cups 4 in transverse direction under the animal to be milked, because of the curve path the teat cups 4 can also be brought into various second positions under the udder.

The robot arm 3 can be movable along the guide element 7 with the aid of a drivable pulling element, such as a chain or a cable, that is connected with the milk box 1. In the embodiment shown, the robot arm 3 is movable along the guide element 7 with the aid of drivable wheels 8 that are connected with the robot arm 3. Of course, other roller elements are possible as well. Viewed in cross-section, the guide element 7 has such a curved shape that at its lower side there is formed a running surface for the wheels 8. During the pivoting movement, the upper part of the robot arm 3, that is fastened to the wheels 8, extends through a groove in the lower side of the guide element 7. The wheels 8 and/or the guide element 7 are preferably provided with a toothing.

The lower part of the robot arm 3 is movable in vertical direction with the aid of control means appropriate therefor. Said control means are shown as a telescope construction, but may of course also be designed differently, such as e.g. a parallelogram construction, a cylinder construction or a hingeable construction.

## Claims

1. A construction for automatically milking animals, said construction comprising a milk box (1) with a milking robot (2), which is provided with a controllable robot arm (3) for connecting teat cups (4) to the teats of an animal to be milked, **characterized in that** the milk box (1) is provided with a guide element (7) for the robot arm (3), said guide element (7) having such a shape that the robot arm (3) when moving along the guide element (7) pivots the teat cups (4) between a first position beyond the reach of the animal to be milked and at least one second position under the udder of the animal to be milked.

2. A construction as claimed in claim 1, **characterized in that** the robot arm (3) is movable along the guide element (7) with the aid of a drivable pulling element, such as a chain or a cable, that is connected with the milk box (1).

3. A construction as claimed in claim 1, **characterized in that** the robot arm (3) is movable along the guide element (7) with the aid of at least one drivable wheel (8) and/or roller element that is connected with the robot arm (3).

4. A construction as claimed in claim 3, **characterized in that** the wheel (8) and/or roller element and/or the guide element (7) are/is provided with a toothing.

5. A construction as claimed in any one of claims 1 to 4, **characterized in that** at least a part of the robot arm (3) is movable substantially in vertical direction with the aid of control means.

6. A construction as claimed in claim 5, **characterized in that** the control means comprise a parallelogram construction.

7. A construction as claimed in claim 5 or 6, **characterized in that** the control means comprise a telescope construction.

8. A construction as claimed in any one of claims 5 to 7, **characterized in that** the control means comprise a cylinder construction.

9. A construction as claimed in any one of claims 5 to 8, **characterized in that** the control means comprise a hingeable construction.

10. A construction as claimed in any one of claims 1 to 9, **characterized in that** at least a part of the robot arm (3) is movable substantially in the longitudinal direction of the milk box (1) with the aid of further control means (5, 6).

11. A construction as claimed in claim 10, **characterized in that** the further control means (5, 6) comprise a further guide element, such as a rail construction (5) with a suspension element (6) that is movable along said rail construction.

12. A construction as claimed in claim 10 or 11, **characterized in that** the further control means comprise a parallelogram construction.

13. A construction as claimed in any one of claims 10 to 12, **characterized in that** the further control means comprise a telescope construction.

14. A construction as claimed in any one of claims 10 to 13, **characterized in that** the further control means comprise a cylinder construction.

15. A construction as claimed in any one of claims 10 to 14, **characterized in that** the further control means comprise a hingeable construction.

## Patentansprüche

1. Vorrichtung zum automatischen Melken von Tieren, wobei die Vorrichtung eine Melkbox (1) mit einem Melkroboter (2) umfaßt, der mit einem steuerbaren Roboterarm (3) zum Anschließen von Zitzenbechern (4) an die Zitzen eines zu melkenden Tieres versehen ist,
**dadurch gekennzeichnet, daß** die Melkbox (1) mit einem Führungselement (7) für den Roboterarm (3) versehen ist, wobei das Führungselement (7) eine solche Form hat, daß der Roboterarm (3) während der Bewegung entlang des Führungselements (7) die Zitzenbecher (4) zwischen einer ersten Position außerhalb der Reichweite des zu melkenden Tieres und mindestens einer zweiten Position unter dem Euter des zu melkenden Tieres verschwenkt.

2. Vorrichtung nach Anspruch 1,
**dadurch gekennzeichnet, daß** der Roboterarm (3) mit Hilfe eines antreibbaren Zugelements, wie z. B. einer Kette oder einem Seil, das mit der Melkbox (1) verbunden ist, entlang des Führungselements (7) bewegbar ist.

3. Vorrichtung nach Anspruch 1,
**dadurch gekennzeichnet, daß** der Roboterarm (3) mit Hilfe mindestens eines antreibbaren Rades (8) und/oder Rollenelements, das mit dem Roboterarm (3) verbunden ist, entlang des Führungselements (7) bewegbar ist.

4. Vorrichtung nach Anspruch 3,
**dadurch gekennzeichnet, daß** das Rad (8) und/oder das Rollenelement und/oder das Führungselement (7) mit einer Zahnung versehen sind/ist.

5. Vorrichtung nach einem der Ansprüche 1 bis 4,
**dadurch gekennzeichnet, daß** zumindest ein Teil des Roboterarmes (3) mit Hilfe von Steuervorrichtungen im wesentlichen in vertikaler Richtung bewegbar ist.

6. Vorrichtung nach Anspruch 5,
**dadurch gekennzeichnet, daß** die Steuervorrichtungen eine Parallelogramm-Konstruktion umfassen.

7. Vorrichtung nach Anspruch 5 oder 6,
**dadurch gekennzeichnet, daß** die Steuervorrichtungen eine Teleskop-Konstruktion umfassen.

8. Vorrichtung nach einem der Ansprüche 5 bis 7,
**dadurch gekennzeichnet, daß** die Steuervorrichtungen eine Zylinder-Konstruktion umfassen.

9. Vorrichtung nach einem der Ansprüche 5 bis 8,
**dadurch gekennzeichnet, daß** die Steuervorrichtungen eine Schwenkvorrichtung umfassen.

10. Vorrichtung nach einem der Ansprüche 1 bis 9,
**dadurch gekennzeichnet, daß** zumindest ein Teil des Roboterarmes (3) mit Hilfe von weiteren Steuervorrichtungen (5, 6) im wesentlichen in Längsrichtung der Melkbox (1) bewegbar ist.

11. Vorrichtung nach Anspruch 10,
**dadurch gekennzeichnet, daß** die weiteren Steuervorrichtungen (5, 6) ein weiteres Führungselement, wie z. B. eine Schienenkonstruktion (5) mit einem Aufhängeelement (6), umfassen, das entlang der Schienenkonstruktion bewegbar ist.

12. Vorrichtung nach Anspruch 10 oder 11,
**dadurch gekennzeichnet, daß** die weiteren Steuervorrichtungen eine Parallelogramm-Konstruktion umfassen.

13. Vorrichtung nach einem der Ansprüche 10 bis 12,
**dadurch gekennzeichnet, daß** die weiteren Steuervorrichtungen eine Teleskop-Konstruktion umfassen.

14. Vorrichtung nach einem der Ansprüche 10 bis 13,
**dadurch gekennzeichnet, daß** die weiteren Steuervorrichtungen eine Zylinder-Konstruktion umfassen.

15. Vorrichtung nach einem der Ansprüche 10 bis 14,
**dadurch gekennzeichnet, daß** die weiteren Steuervorrichtungen eine Schwenkvorrichtung umfassen.

## Revendications

1. Structure pour la traite automatique d'animaux, ladite structure comprenant un box de traite (1) avec une trayeuse (2), qui est pourvu d'un bras de robot pouvant être commandé (3) pour connecter des gobelets trayeurs (4) aux trayons d'un animal devant être trait, **caractérisée en ce que** le box de traite (1) est pourvu d'un élément de guidage (7) pour le bras de robot (3), ledit élément de guidage (7) ayant une forme telle que le bras de robot (3) lorsque celui-ci se déplace le long de l'élément de guidage (7) fait pivoter les gobelets trayeurs (4) entre une première position hors de portée de l'animal devant être trait et au moins une seconde position située sous le pis de l'animal devant être trait.

2. Structure selon la revendication 1, **caractérisée en ce que** le bras de robot (3) peut se déplacer le long de l'élément de guidage (7) à l'aide d'un élément de traction pouvant être entraîné, tel qu'un câble ou une chaîne, qui est connecté au box de traite (1).

3. Structure selon la revendication 1, **caractérisée en ce que** le bras de robot (3) peut se déplacer le long de l'élément de guidage (7) à l'aide d'au moins une roue pouvant être entraînée (8) et/ou d'un élément de rouleau qui est connecté au bras de robot (3).

4. Structure selon la revendication 3, **caractérisée en ce que** la roue (8) et/ou l'élément de rouleau et/ou l'élément de guidage (7) sont/est pourvu(s) d'une denture.

5. Structure selon l'une quelconque des revendications 1 à 4, **caractérisée en ce qu'**au moins une partie du bras de robot (3) peut se déplacer sensiblement suivant une direction verticale à l'aide de moyens de commande.

6. Structure selon la revendication 5, **caractérisée en ce que** les moyens de commande comprennent une structure en parallélogramme.

7. Structure selon la revendication 5 ou 6, **caractérisée en ce que** les moyens de commande comprennent une structure télescopique.

8. Structure selon l'une quelconque des revendications 5 à 7, **caractérisée en ce que** les moyens de commande comprennent une structure cylindrique.

9. Structure selon l'une quelconque des revendications 5 à 8, **caractérisée en ce que** les moyens de commande comprennent une structure articulée.

10. Structure selon l'une quelconque des revendications 1 à 9, **caractérisée en ce qu'**au moins une partie du bras de robot (3) peut se déplacer sensiblement suivant la direction longitudinale du box de traite (1) à l'aide de moyens de commande supplémentaires (5, 6).

11. Structure selon la revendication 10, **caractérisée en ce que** les moyens de commande supplémentaires (5, 6) comprennent un élément de guidage supplémentaire, tel qu'une structure de rails (5) avec un élément de suspension (6) qui peut se déplacer le long de ladite structure de rails.

12. Structure selon la revendication 10 ou 11, **caractérisée en ce que** les moyens de commande supplémentaires comprennent une structure en parallélogramme.

13. Structure selon l'une quelconque des revendications 10 à 12, **caractérisée en ce que** les moyens de commande supplémentaires comprennent une structure télescopique.

14. Structure selon l'une quelconque des revendications 10 à 13, **caractérisée en ce que** les moyens de commande supplémentaires comprennent une structure cylindrique.

15. Structure selon l'une quelconque des revendications 10 à 14, **caractérisée en ce que** les moyens de commande supplémentaires comprennent une structure articulée.
